# FASCICULE DE BREVET EUROPEEN

(11) **EP 2 775 888 B1**
(45) Date de publication et mention de la délivrance du brevet: **03.02.2016**
(21) Numéro de dépôt: 12791219.4
(22) Date de dépôt: 24.10.2012
(51) Int. Cl.: A47J 19/02

(54) **PRESSOIR À PRESSAGE PAR VIS**
SCHRAUBENPRESSE
SCREW PRESS

(30) Priorité: 28.10.2011 CN 201110333418
(43) Date de publication de la demande: 17.09.2014
(60) Demande divisionnaire: 15197114.0
(73) Titulaire: SEB S.A., 69130 Ecully (FR)
(72) Inventeur: CAI, Caide, Shaoxing City Zhejiang Province 312017 (CN); ZOU, Yamin, Shaoxing City Zhejiang Province 312017 (CN)
(74) Mandataire: Cémeli, Eric Philippe Laurent
(86) Numéro de dépôt international: PCT/FR2012/052444
(87) Numéro de publication internationale: WO 2013/060986

(56) Documents cités:
- WO-A2-2010/007290
- WO-A2-2012/057483

## Description

### Domaine technique

La présente invention concerne un pressoir à pressage par vis.

### Technique antérieure

Il est connu un pressoir à pressage par vis prévu pour presser des aliments par l'intermédiaire d'une vis tournant à une vitesse faible de manière à extraire le jus des aliments. Ce dispositif est également appelé machine à jus, car il permet de conserver de manière optimale la saveur originale et la nutrition du jus fabriqué. L'apparition sur le marché de ce pressoir à pressage par vis ouvre une nouvelle perspective par rapport aux extracteurs de jus centrifuge à haute vitesse utilisés pendant une longue période. Cependant, pour ce pressoir à pressage par vis, lors de l'extraction à grand volume du jus d'aliments tels que par exemple les carottes etc..., les aliments sont susceptibles de bloquer la vis et la rotation de la vis est empêchée, de sorte que le pressoir ne peut pas fonctionner bien et l'efficacité de fonctionnement est affectée.

Pour résoudre ce problème, la solution actuelle est comme suit : le pressoir est équipé d'un interrupteur de marche avant et arrière ; dans le cas où le moteur est empêché de tourner, cet interrupteur est manipulé manuellement par l'utilisateur pour obtenir la rotation en sens inverse du moteur, de manière à laisser les aliments sortir du pressoir et éliminer la condition dans laquelle le moteur est empêché de tourner.

L'interrupteur est manipulé manuellement pour obtenir la rotation en sens inverse du moteur. Après la suppression du blocage de la vis, l'interrupteur est manipulé afin que le dispositif tourne vers l'avant et continue de fonctionner. De cette manière, dans le cas où le dispositif est souvent empêché de tourner, l'opération est très gênante, et la durée de vie du moteur est largement affectée.

Un pressoir à pressage par vis selon les caractéristiques du préambule de la revendication 1 est connu du document WO 2010/007290.

### Exposé de l'invention

La présente invention a pour but de résoudre les problèmes du pressoir à presssage par vis conventionnel, dans lequel la vis est susceptible d'être entravée, l'opération est compliquée, l'efficacité de fonctionnement est faible, en proposant un pressoir à pressage par vis évitant l'obstruction de la vis et permettant une utilisation simple et une efficacité de fonctionnement élevée.

Afin d'atteindre le but de l'invention, la solution technique adoptée dans la présente invention est un pressoir à pressage par vis, comportant un bâti sur lequel est monté un moteur, une vis de pressage étant montée sur un axe de sortie du moteur, ladite vis de pressage est installée dans un manchon de pressage équipé d'une grille filtrante, des moyens de séparation des jus/résidus étant installés au dessous dudit manchon de pressage, du fait que ladite vis de pressage présente une partie supérieure, qui est une partie de coupe, et une partie inférieure, qui est une partie de pressage, et que ladite partie de coupe est constituée par plusieurs lames de coupe qui forment axialement plusieurs niveaux. Les aliments sont ainsi découpés en plusieurs tronçons par la partie de coupe, et ces tronçons sont plus facilement pressés par la partie de pressage, en limitant le risque de blocage de la vis de pressage.

Avantageusement, les lames de coupe sont agencées sur une même moitié de la circonférence de la vis de pressage. Cette disposition facilite l'introduction des tronçons d'aliments découpés dans la partie de pressage.

Avantageusement encore, la lame de coupe du niveau le plus bas de ladite partie de coupe est disposée la plus avant dans le sens circonférentiel et la lame de coupe du niveau le plus haut de ladite partie de coupe est disposée en arrière dans le sens circonférentiel par rapport à la lame de coupe du niveau le plus bas de ladite partie de coupe. Ainsi les aliments sont d'abord découpés par la lame de coupe du niveau le plus bas.

Avantageusement encore, une à trois lame(s) de coupe de niveau intermédiaire peu(ven)t être intercalée(s) entre la lame de coupe du niveau le plus bas et la lame de coupe du niveau le plus haut. Cette disposition permet de sectionner les aliments en plusieurs tronçons à chaque tour de la vis de pressage.

En outre, la lame de coupe du niveau le plus bas de ladite partie de coupe est disposée sur un hélicoïde étendu de l'hélicoïde de pressage et/ou est disposée de façon indépendante au niveau le plus bas.

De plus, la lame de coupe du niveau le plus haut de ladite partie de coupe présente une surface d'outil inclinée ou en arc, qui se raccorde à l'hélicoïde de pressage.

Par ailleurs, la forme de la surface d'outil des lames de coupe peut être plane, inclinée ou en arc.

En outre, les lames de coupe de ladite partie de coupe sont disposées dans le sens circonférentiel de façon successive l'une après l'autre sur la vis de pressage, les lames de coupe étant reliées à la partie de pressage, la lame de coupe du niveau le plus bas de ladite partie de coupe étant disposée le plus avant dans le sens circonférentiel, la ou les lames de coupe du ou des autres niveaux de ladite partie de coupe étant disposées, de façon successive depuis le niveau bas vers le niveau haut, en arrière de la lame de coupe du niveau le plus bas de ladite partie de coupe.

De plus, ladite partie de coupe comprend un nombre de niveaux de lames de coupe compris entre 2 et 5.

Par ailleurs, la vis de pressage est dépourvue de partie filtrante.

La vis de pressage utilisée dans la présente invention peut également être appliquée aux machines à lait de soja.

Selon l'invention, il en résulte de façon avantageuse que la partie de coupe sur la vis de pressage est constituée par plusieurs lames de coupe qui forment axialement plusieurs niveaux pour découper des aliments en tronçons, de manière à éviter efficacement que des aliments ne puissent bloquer la vis de pressage et améliorer l'efficacité de fonctionnement.

### Brève description des dessins

La figure 1 est une vue schématique de construction de la présente invention.
La figure 2 est une vue schématique de construction du dispositif de pressage et broyage selon l'invention.
La figure 3 est une vue de dessus du dispositif de pressage et broyage selon l'invention.
La figure 4 est une vue schématique de construction de la vis de pressage selon l'invention.
La figure 5 est une vue de dessus d'une variante de la vis de pressage selon l'invention.
La figure 6 est une vue en perspective de la vis de pressage selon un autre exemple de réalisation de l'invention.

### Description détaillée de modes de réalisation de l'invention

La présente invention est décrite plus en détail ci-dessous en référence aux exemples particuliers de réalisation, mais la présente invention n'est nullement limitée à ces modes particuliers de réalisation. Il doit être compris par l'homme du métier que la présente invention englobe toutes les alternatives, modifications et équivalents inclus éventuellement dans le cadre des revendications.

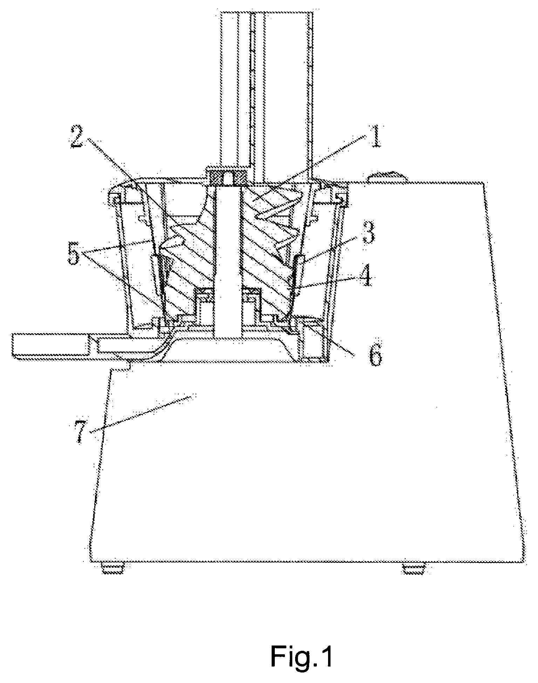

Comme on peut le voir sur les figures 1 à 5, un pressoir à pressage par vis comporte un bâti 7 sur lequel est monté un moteur. Une vis de pressage 1 est montée sur un axe de sortie du moteur. Ladite vis de pressage 1 est installée dans un manchon de pressage 3 équipé d'une grille filtrante 5. Des moyens de séparation 6 des jus/résidus sont installés au dessous dudit manchon de pressage 3. Ladite vis de pressage 1 présente une partie supérieure, qui est une partie de coupe 2, et une partie inférieure, qui est une partie de pressage 4. Ladite partie de coupe 2 est constituée par plusieurs lames de coupe qui forment axialement plusieurs niveaux.

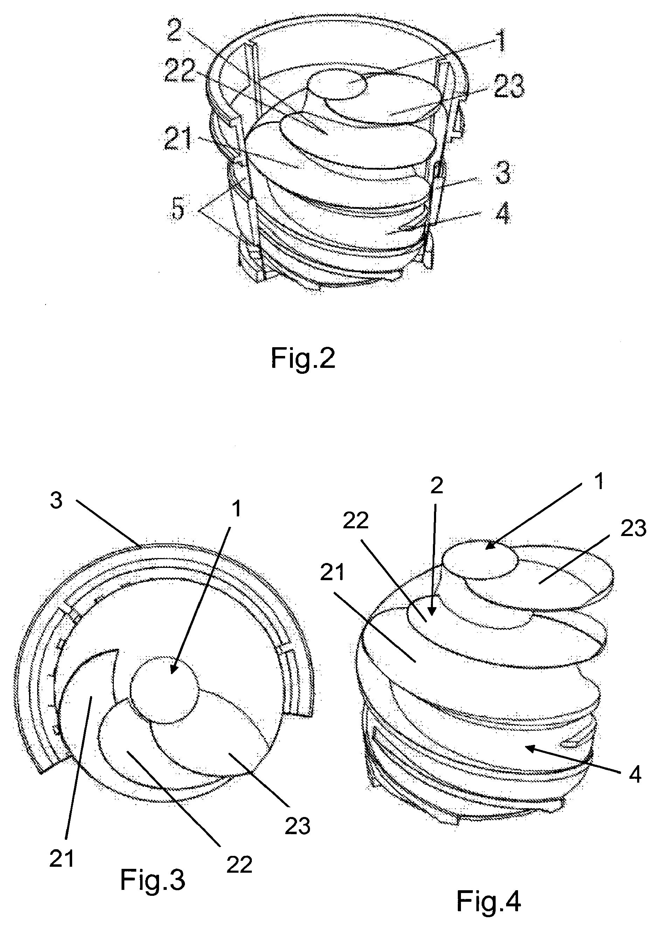

Tel que bien visible sur les figures 2 à 4, la partie de pressage 4 forme un hélicoïde de pressage présentant plusieurs portions d'hélicoïde plus ou moins étendues.

La lame de coupe du niveau le plus bas 21 de ladite partie de coupe 2 est disposée sur un hélicoïde étendu de l'hélicoïde de pressage. Tel que bien visible sur la figure 3, l'hélicoïde étendu de l'hélicoïde de pressage s'étend sur au moins un quart de la circonférence de la vis de pressage 1. La forme de la surface d'outil de la lame de coupe du niveau le plus bas 21 est en arc, tel que bien visible sur les figures 2 et 4.

La lame de coupe du niveau le plus haut 23 de ladite partie de coupe 2 est disposée sur un autre hélicoïde étendu de l'hélicoïde de pressage. Tel que bien visible sur la figure 1, l'autre hélicoïde étendu de l'hélicoïde de pressage s'étend sur la totalité de la circonférence de la vis de pressage 1. La forme de la surface d'outil de la lame de coupe du niveau le plus haut 23 est plane, tel que bien visible sur les figures 3 et 4.

Tel que bien visible sur les figures 2 à 4, la lame de coupe du niveau le plus bas 21 de ladite partie de coupe 2 est disposée la plus avant dans le sens circonférentiel de la vis de pressage 1 et la lame de coupe du niveau le plus haut 23 de ladite partie de coupe 2 est disposée en arrière dans le sens circonférentiel par rapport à la lame de coupe du niveau le plus bas 21 de ladite partie de coupe 2. Une lame de coupe d'un niveau intermédiaire 22 est intercalée entre la lame de coupe du niveau le plus bas 21 et la lame de coupe du niveau le plus haut 23.

Tel que bien visible sur les figures 2 à 4, et notamment sur la figure 3, les lames de coupe du niveau le plus bas 21, du niveau intermédiaire 22 et du niveau le plus haut 23 sont agencées sur une même moitié de la circonférence de la vis de pressage 1.

Les lames de coupe de ladite partie de coupe 2 sont disposées dans le sens circonférentiel de façon successive l'une après l'autre sur la vis de pressage 1, les lames de coupe étant reliées à la partie de pressage 4. La lame de coupe du niveau le plus bas 21 de ladite partie de coupe 2 est disposée la plus en avant dans le sens circonférentiel dans lequel la vis de pressage 1 tourne. Les lames de coupe des autres niveaux 22 ; 23 de ladite partie de coupe 2 sont disposées de façon successive depuis le niveau le plus bas vers le niveau le plus haut en arrière de la lame de coupe du niveau le plus bas 21 de ladite partie de coupe 2.

Le nombre de niveaux de lames de coupe de ladite partie de coupe 2 est compris entre 2 à 5. Ainsi une à trois lame(s) de coupe de niveau intermédiaire 22 peu(ven)t être intercalée(s) entre la lame de coupe du niveau le plus bas 21 et la lame de coupe du niveau le plus haut 23.

Dans l'exemple de réalisation, le nombre de lames de coupe est 3. La forme de la surface d'outil de la lame de coupe du niveau le plus haut 23 est plane. La forme de la surface d'outil des lames de coupe des autres niveaux 21 ; 22 est en arc. Les lames de coupe de chaque niveau 21 ; 22 ; 23 sont disposées sur l'hélicoïde de la vis de pressage 1.

Lors de l'introduction des ingrédients, les ingrédients tombent dans l'espace formé par la vis de pressage 1 et le manchon de pressage 3. Tout d'abord, les ingrédients sont coupés par la lame de coupe du niveau le plus bas 21 disposée la plus avant, puis par la lame de coupe du niveau intermédiaire 22, et enfin par la lame de coupe du niveau le plus haut 23. De cette façon, les ingrédients introduits sont coupés en trois fois, et la quantité d'introduction est réduite pour chaque coupe, de manière à empêcher l'entrée d'ingrédients massifs de grande taille dans la partie de pressage 4 du pressoir. Ainsi, il est possible d'éviter efficacement que les ingrédients massifs de grande taille ne puissent bloquer la vis de pressage 1 et d'améliorer l'efficacité de fonctionnement du pressoir.

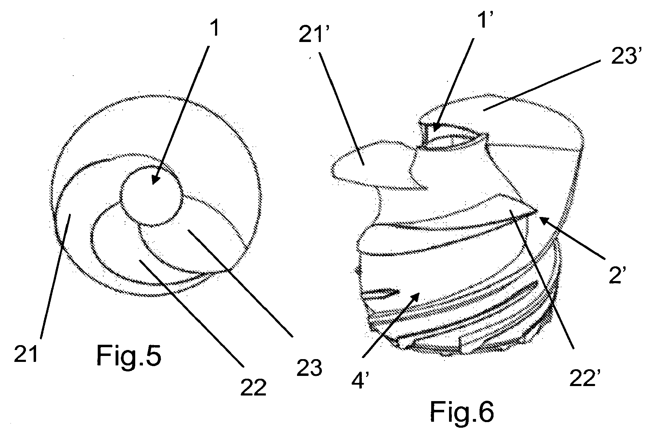

La figure 5 illustre une variante de réalisation de la vis de pressage 1, dans laquelle la forme de la lame de coupe du niveau le plus bas 21 a été modifiée. Tel que bien visible sur la figure 5, les lames de coupe du niveau le plus bas 21, du niveau intermédiaire 22 et du niveau le plus haut 23 sont agencées sur une même moitié de la circonférence de la vis de pressage 1.

La vis de pressage 1 utilisée dans la présente invention peut également être appliquée aux machines à lait de soja.

La figure 6 est un autre exemple de réalisation de l'invention. La lame de coupe du niveau le plus haut 23' est disposée sur un hélicoïde étendu de l'hélicoïde de pressage, et les lames de coupe des autres niveaux 21', 22' sont séparées et disposées de façon indépendante. La lame de coupe du niveau le plus bas 21' est disposée la plus avant dans le sens de mouvement de la vis de pressage 1', suivie de la lame de coupe du niveau intermédiaire 22'. La lame de coupe du niveau le plus haut 23' est disposée la plus en arrière.

Tel que bien visible sur la figure 6, les lames de coupe du niveau le plus bas 21', du niveau intermédiaire 22' et du niveau le plus haut 23' sont disposées tout autour de la circonférence de la vis de pressage 1' sur la partie de coupe 2'. La lame de coupe du niveau le plus haut 23' de ladite partie de coupe 2' présente une surface d'outil inclinée ou en arc, qui se raccorde à l'hélicoïde de pressage. La partie de pressage 4' forme un hélicoïde de pressage présentant plusieurs portions d'hélicoïde plus ou moins étendues.

Tel que bien visible sur les figures 1 à 6, la vis de pressage 1 ; 1' est dépourvue de partie filtrante.

A titre de variante, la vis de pressage 1 ; 1' n'est pas directement entraînée par l'axe de sortie du moteur.

## Revendications

1. Pressoir à pressage par vis, comportant un bâti (7) sur lequel est monté un moteur, une vis de pressage (1 ; 1') étant montée sur un axe de sortie du moteur, ladite vis de pressage (1 ; 1') étant installée dans un manchon de pressage (3) équipé d'une grille filtrante (5), des moyens de séparation (6) des jus/résidus étant installés en dessous dudit manchon de pressage (3), **caractérisé en ce que** ladite vis de pressage (1 ;1') comporte une partie supérieure, qui est une partie de coupe (2 ; 2'), et une partie inférieure, qui est une partie de pressage (4 ; 4'), et **en ce que** ladite partie de coupe (2 ; 2') est constituée par plusieurs lames de coupe (21, 22, 23 ; 21', 22', 23') qui forment axialement plusieurs niveaux.

2. Pressoir à pressage par vis selon la revendication 1, **caractérisé en ce que** les lames de coupe (21, 22, 23) sont agencées sur une même moitié de la circonférence de la vis de pressage (1).

3. Pressoir à pressage par vis selon l'une des revendications 1 ou 2, **caractérisé en ce que** la lame de coupe du niveau le plus bas (21 ; 21') de ladite partie de coupe (2 ; 2') est disposée la plus avant dans le sens circonférentiel et **en ce que** la lame de coupe du niveau le plus haut (23 ; 23') de ladite partie de coupe (2 ; 2') est disposée en arrière dans le sens circonférentiel par rapport à la lame de coupe du niveau le plus bas (21 ; 21') de ladite partie de coupe (2 ; 2').

4. Pressoir à pressage par vis selon l'une des revendications 1 à 3, **caractérisé en ce qu'**une à trois lame(s) de coupe de niveau intermédiaire (22 ; 22') est/sont intercalée(s) entre la lame de coupe du niveau le plus bas (21 ; 21') et la lame de coupe du niveau le plus haut (23 ; 23').

5. Pressoir à pressage par vis selon l'une des revendications 1 à 4, **caractérisé en ce que** la lame de coupe du niveau le plus bas (21 ; 21') de ladite partie de coupe (2 ; 2') est disposée sur un hélicoïde étendu de l'hélicoïde de pressage et/ou est disposée de façon indépendante au niveau le plus bas.

6. Pressoir à pressage par vis selon l'une des revendications 1 à 5, **caractérisé en ce que** la lame de coupe du niveau le plus haut (23 ; 23') de ladite partie de coupe (2 ; 2') présente une surface d'outil inclinée ou en arc qui se raccorde à l'hélicoïde de pressage.

7. Pressoir à pressage par vis selon l'une des revendications 1 à 6, **caractérisé en ce que** la forme de la surface d'outil des lames de coupe peut être plane, inclinée ou en arc.

8. Pressoir à pressage par vis selon l'une des revendications 1 à 7, **caractérisé en ce que** les lames de coupe de ladite partie de coupe (2 ; 2') sont disposées dans le sens circonférentiel de façon successive l'une après l'autre sur la vis de pressage (1 ; 1'), les lames de coupe étant reliées à la partie de pressage (4 ; 4'), **en ce que** la lame de coupe du niveau le plus bas (21 ; 21') de ladite partie de coupe (2 ; 2') est disposée la plus avant dans le sens circonférentiel, **en ce que** la ou les lames de coupe des autres niveaux (22, 23 ; 22', 23') de ladite partie de coupe (2 ; 2') sont disposées de façon successive depuis le niveau le plus bas vers le niveau le plus haut en arrière de la lame de coupe du niveau le plus bas (21 ; 21') de ladite partie de coupe (2 ; 2').

9. Pressoir à pressage par vis selon l'une des revendications 1 à 8, **caractérisé en ce que** le nombre de niveaux des lames de coupe de ladite partie de coupe (2 ; 2') est compris entre 2 et 5.

10. Pressoir à pressage par vis selon l'une des revendications 1 à 9, **caractérisé en ce que** la vis de pressage (1 ; 1') est dépourvue de partie filtrante.

## Patentansprüche

1. Schneckenpresse, die ein Gestell (7) umfasst, auf dem ein Motor montiert ist, wobei eine Pressschnecke (1; 1') auf eine Ausgangsachse des Motors montiert ist und wobei die genannte Pressschnecke (1; 1') in einen Pressstutzen (3) eingesetzt ist, der mit einem Filtergitter (5) ausgestattet ist, wobei Mittel (6) zum Trennen von Saft und Rückständen unter dem genannten Pressstutzen (3) angebracht sind, **dadurch gekennzeichnet, dass** die genannte Pressschnecke (1; 1') einen oberen Teil, der einen Schneidteil (2; 2') darstellt, und einen unteren Teil umfasst, der einen Pressteil (4; 4') darstellt, und dass der genannte Schneidteil (2; 2') aus mehreren Schneidklingen (21, 22, 23; 21', 22', 23') besteht, die axial mehrere Ebenen bilden.

2. Schneckenpresse nach Anspruch 1, **dadurch gekennzeichnet, dass** die Schneidklingen (21, 22, 23) auf ein- und derselben Hälfte des Umfangs der Pressschnecke (1) angeordnet sind.

3. Schneckenpresse nach einem der Ansprüche 1 oder 2, **dadurch gekennzeichnet, dass** die Schneidklinge der untersten Ebene (21; 21') des genannten Schneidteils (2; 2') in Umfangsrichtung am weitesten vorne angeordnet ist und dass die Schneidklinge der obersten Ebene (23; 23') des genannten Schneidteils (2; 2') in Umfangsrichtung hinter der Schneidklinge der untersten Ebene (21; 21') des genannten Schneidteils (2; 2') angeordnet ist.

4. Schneckenpresse nach einem der Ansprüche 1 bis 3, **dadurch gekennzeichnet, dass** eine bis drei Schneidklinge(n) der mittleren Ebene (22; 22') zwischen der Schneidklinge der untersten Ebene (21; 21') und der Schneidklinge der obersten Ebene (23; 23') eingefügt ist/sind.

5. Schneckenpresse nach einem der Ansprüche 1 bis 4, **dadurch gekennzeichnet, dass** die Schneidklinge der untersten Ebene (21; 21') des genannten Schneidteils (2; 2') auf einer erweiterten Schraubenlinie der Pressschnecke und/oder unabhängig auf der untersten Ebene angeordnet ist.

6. Schneckenpresse nach einem der Ansprüche 1 bis 5, **dadurch gekennzeichnet, dass** die Schneidklinge der obersten Ebene (23; 23') des genannten Schneidteils (2; 2') eine geneigte oder bogenförmige Werkzeugfläche aufweist, die sich an die Pressschnecke anschließt.

7. Schneckenpresse nach einem der Ansprüche 1 bis 6, **dadurch gekennzeichnet, dass** die Form der Werkzeugfläche der Schneidklingen eben, geneigt oder bogenförmig sein kann.

8. Schneckenpresse nach einem der Ansprüche 1 bis 7, **dadurch gekennzeichnet, dass** die Schneidklingen des genannten Schneidteils (2; 2') in Umfangsrichtung aufeinanderfolgend der Reihe nach an der Pressschnecke (1; 1') angeordnet sind, wobei die Schneidklingen mit dem Pressteil (4; 4') verbunden sind, dass die Schneidklinge der untersten Ebene (21; 21') des genannten Schneidteils (2; 2') in Umfangsrichtung am weitesten vorne angeordnet ist und dass die Schneidklinge(n) der anderen Ebenen (22, 23; 22', 23') des genannten Schneidteils (2; 2') aufeinanderfolgend von der untersten zur obersten Ebene hin hinter der Schneidklinge der untersten Ebene (21; 21') des genannten Schneidteils (2; 2') angeordnet ist/sind.

9. Schneckenpresse nach einem der Ansprüche 1 bis 8, **dadurch gekennzeichnet, dass** die Anzahl der Ebenen der Schneidklingen des genannten Schneidteils (2; 2') zwischen 2 und 5 beträgt.

10. Schneckenpresse nach einem der Ansprüche 1 bis 9, **dadurch gekennzeichnet, dass** die Pressschnecke (1; 1 ') keinen Filterteil aufweist.

## Claims

1. Screw press, comprising a frame (7) on which is mounted a motor, a pressing screw (1; 1') being mounted on an output shaft of the motor, said pressing screw (1; 1') being installed in a pressing sleeve (3) equipped with a filter screen (5), juice/residue separating means (6) being installed below said pressing sleeve (3), **characterised in that** said pressing screw (1; 1') comprises an upper part which is a cutting part (2; 2') and a lower part, which is a pressing part (4; 4'), and **in that** said cutting part (2; 2') consists of several cutting blades (21, 22, 23; 21', 22', 23') which form axially several levels.

2. Screw press according to claim 1, **characterised in that** the cutting blades (21, 22, 23) are arranged on the same half of the circumference of the pressing screw (1).

3. Screw press according to claim 1 or 2, **characterised in that** the cutting blade of the lowest level (21; 21') of said cutting part (2; 2') is arranged foremost in the circumferential direction and **in that** the cutting blade of the highest level (23; 23') of said cutting part (2; 2') is arranged behind in the circumferential direction relative to the cutting blade of the lowest level (21; 21') of said cutting part (2; 2').

4. Screw press according to one of claims 1 to 3, **characterised in that** one to three intermediate level cutting blade(s) (22; 22') is/are inserted between the cutting blade of the lowest level (21; 21') and the cutting blade of the highest level (23; 23').

5. Screw press according to one of claims 1 to 4, **characterised in that** the cutting blade of the lowest level (21; 21') of said cutting part (2; 2') is arranged on an extended helicoid of the pressing helicoid and/or is arranged independently at the lowest level.

6. Screw press according to one of claims 1 to 5, **characterised in that** the cutting blade of the highest level (23; 23') of said cutting part (2; 2') has an inclined or curved tool surface which is connected to the pressing helicoid.

7. Screw press according to one of claims 1 to 6, **characterised in that** the shape of the tool surface of the cutting blades may be flat, inclined or curved.

8. Screw press according to one of claims 1 to 7, **characterised in that** the cutting blades of said cutting part (2; 2') are arranged in the circumferential direction successively one after the other on the pressing screw (1; 1'), the cutting blades being connected to the pressing part (4; 4'), and **in that** the cutting blade of the lowest level (21; 21') of said cutting part (2; 2') is arranged foremost in the circumferential direction, **in that** the cutting blade(s) of other levels (22, 23; 22', 23') of said cutting part (2; 2') are arranged successively from the lowest level towards the highest level behind the cutting blade of the lowest level (21; 21') of said cutting part (2; 2').

9. Screw press according to one of claims 1 to 8, **characterised in that** the number of levels of the cutting blades of said cutting part (2; 2') is between 2 and 5.

10. Screw press according to one of claims 1 to 9, **characterised in that** the pressing screw (1; 1') has no filtering part.
